# EUROPEAN PATENT APPLICATION

(11) **EP 0 559 301 A2**
(43) Date of publication of application: **08.09.1993**
(21) Application number: 93201502.7
(22) Date of filing: 18.02.1991
(51) Int. Cl.: B65G 47/84

(54) **Conveyor**

(30) Priority: 19.02.1990 NL 9000393
(62) Divisional of application: 91200334.0
(71) Applicant: VANDERLANDE INDUSTRIES NEDERLAND B.V., NL-5466 RB Veghel (NL)
(72) Inventor: Van den Goor, Jakobus Marie, NL-5674 SH Nuenen (NL)
(74) Representative: Vollebregt, Cornelis Jacobus, Ir.

(57) **Abstract**

The invention relates to a conveyor having a frame and an endless drivable conveying means provided with carriers extending parallel to each other, transversely to the direction of displacement of the conveying means. The carriers (7) are pivotable coupled to flexible coupling means (1,2). At least some of the carriers (7) support pusher shoes (18) which are connected to guide means (28,29). The guide means (28,29) can co-operate with two intersecting guide rails (28,29) provided at certain locations and extending in opposite directions (D,C), obliquely with respect to the intended direction of movement of the carriers (7). Upstream of the point of intersection of the two guide rails (28,29), when seen in the intended direction of movement (C,D) of the guide means (26) along the guide rails (28,29), a switch blade (59,55) is disposed near each guide rail so as to be pivotable about a pivot axis (58,54) disposed upstream of the point of intersection, whilst resilient means (61,57) are provided, which attempt to keep the switch blade (59,55) in question in a position extending transversely to the associated rail (28,29).

## Description

The invention relates to a conveyor having a frame and an endless drivable conveying means provided with carriers extending parallel to each other, transversely to the direction of displacement of the conveying means, said carriers being pivotally coupled to at least one endless flexible coupling means, whilst at least some of the carriers support pusher shoes, said pusher shoes being connected to guide means located at the sides of the carriers remote from the pusher shoes, which guide means can co-operate with two guide rails provided at certain locations and extending in opposite directions, obliquely with respect to the intended direction of movement of the carriers, said guide rails intersecting one another, whereby at the location of the point of intersection an adjustable switching device is provided, which is provided with at least one switch blade, which is adjustable between a first position, in which a guide means can move along the one of the two guide rails, and a second position, in which the guide means can move along the other of the two guide rails.

Such a conveyor is known from US-A-3,361,247 (figure 18). In said conveyor there has been provided an actuating element which can be moved between two positions by means of guide means passing through the two rails.

Said actuating element has been pivotable coupled to a single switch blade by means of pivotable links for pivoting the single switch blade between a first position wherein the switch blade extends transverse to a first guide rail and forms part of the boundary of a second guide rail and a second position wherein the switch blade extends transverse to the second guide rail and forms part of the boundary of the first guide rail.

Said known structure is quite complicated and as further the actuating element has been arranged close to the point of intersection there is a risk that jamming of guide means and switch blade occurs especially when the carries are moving with high speed.

Now according to the invention upstream of the point of intersection of the two guide rails, when seen in the intended direction of movement of the guide means along the guide rails, a switch blade is disposed near each guide rail so as to be pivotable about a pivot axis disposed upstream of the point of intersection, whilst resilient means are provided, which attempt to keep the switch blade in question in a postion extending transversely to the associated rail.

In using the arrangement according the invention there can be obtained a simple structure wherein the switch blades can be directly actuated by the guide means and wherein both switch blades together can act for smoothly guiding the guide means through the point of intersection of the guide rails as said switch blades can form parts of opposite walls of the guide rail through which a guide means moves.

The invention will be further explained hereafter with reference to an embodiment of the construction according to the invention diagrammatically illustrated in the accompanying figures.

Figure 1 is a perspective view of part of a conveying means of a conveyor according to the invention.

Figure 2 is a larger-scale sectional view of a carrier with a pusher shoe supported by the carrier.

Figures 3 shows a switching construction according to the invention.

The general principle of the conveyor according to the invention may e.g. be such as described in the US Patents 4,717,011 and 4,732,259. Therefore the general construction of the conveyor according to the invention is not described and shown herein, as it is considered to be obvious to those skilled in the art.

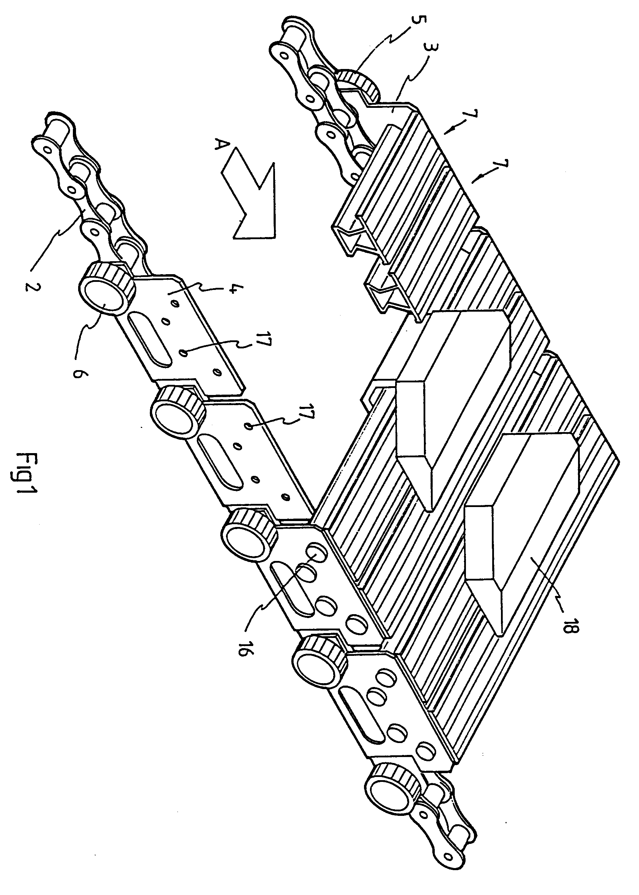

As is illustrated more in particular in Figure 1 the conveyor comprises an endless conveying means, which is only partially illustrated in Figure 1, said conveying means being provided with two endless coupling means formed by chains 1 and 2. The endless chains extending parallel to each other are passed over sprocket wheels and/or tensioning wheels (not shown), whereby at least a few of said sprocket wheels can be driven, so as to be able to move the upper parts of said chains illustrated in Figure 1 in the direction according to the arrow A.

Supporting plates 3 and 4, extending perpendicularly to the pivot pins of the chains, are secured to the chains in the manner illustrated in Figure 1. The supporting plates 3 and 4 respectively are thereby each pivotally coupled to the chain 1 or 2 in question in a single point, in such a manner that the pivot pin about which the supporting plate 3 or 4 can pivot with respect to the chain 1 or 2, coincides with the central axis of a pivot pin forming part of the chain in question. Near the pivot pin in question the chain is also provided with guide rollers 5 and 6 respectively, which support at least the upper parts of the chains 1 and 2 when they move in the direction according to the arrow A on supporting rails (not shown) or the like forming part of the device.

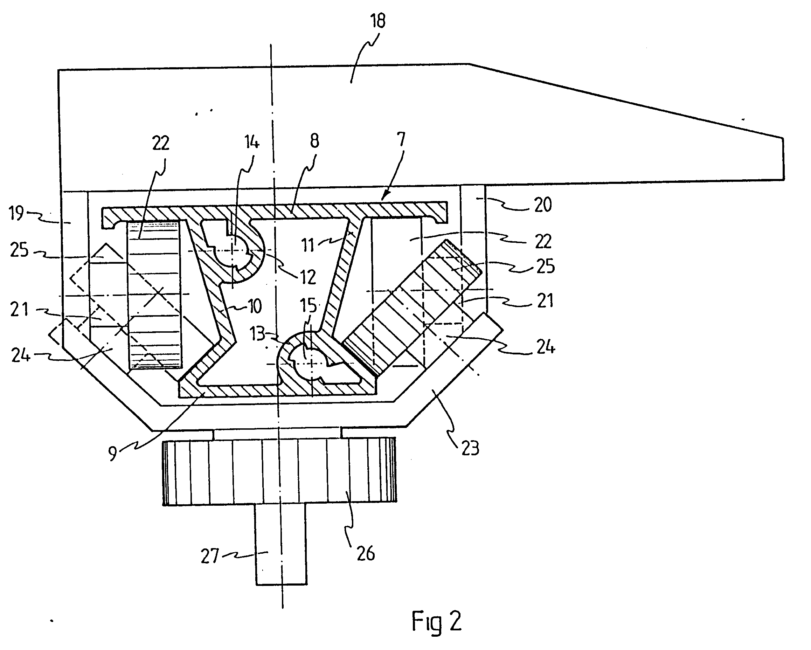

Two carriers 7 extending parallel to each other are provided between each pair of supporting plates 3 and 4. In the embodement illustrated in Figures 1 and 2 the carriers 7 e.g. consist of sections extruded from aluminium or plastic material. Each section shown in Figures 1 and 2 thereby has a flat, plate-shaped, more particularly rectangular, upper side 8 and a bottom side 9 extending parallel to said upper side. The upper side 8 is connected to the bottom side by two wall parts 10 and 11 having a V-shaped section. Recesses 14 and 15 respectively are formed, by means of further wall parts 12 and 13 respectively, in the inner sides of said wall parts, said recesses funcioning to receive connecting pins 16, which can be inserted into the holes 17 provided in the supporting plates 3 and 4 and into the recesses 14 and 15 in order to secure the ends of the carriers 7 in question to the supporting plates 3 and 4.

Each pair of supporting plates 3 and 4 therefore supports two carriers 7 extending parallel to each other, whilst a pusher shoe 18 located above each group of two carriers thus formed co-operates with said carriers. Embodiments wherein more that two, or only one, carriers are secured to a pair of supporting plates are also possible, however.

Arms 19 and 20 reaching downwards are mounted on the bottom side of the pusher shoes 18. The arm 20 thereby extends through the slot located between the upper sides 8 of the carriers 7 of a group supported by opposed supporting plates 3 and 4, whilst the arm 19 extends through the slot located between the rear boundary edge of the upper side of the rearmost carrier 7 associated with a group and the foremost boundary edge of a group of carriers supported by a pair of supporting plates when seen in the direction of movement of the carriers 7.

Pins 21 are secured to the sides of the arms 19 and 20 directed towards each other, rollers 22 being freely rotatable about said pins. As will be apparent from Figure 2 the axes of rotation of the rollers 22 lie in a plane extending perpendicularly to the longitudinal direction of the carrier 7 in question. The rollers 22 thereby bear against the bottom side of the plate-shaped upper side 8 of the carrier in question.

A coupling strip 23 extending under the carrier 7 in question is provided between the arms 19 and 20. Pins 24 are secured to the end of the coupling strip 23 located near the arms 19 and 20 respectively, rollers 25 being rotatable about said pins. As will be apparent from Figure 2 the axes of rotation of the rollers 25, which also lie in a plane extending perpendicularly to the longitudinal axis of the carrier 7 in question, cross the axes of rotation of the nearby rollers 22 at an angle of ± 45°. The rollers 25 are thereby supported on the lower parts of the V-shaped partitions 10 and 11 respectively.

It will be apparent that in this way the pusher shoe 18 is supported on the carrier 7, under the upper surface of said carrier, by means of the rollers 22 and 25, in such a manner that the pusher shoe 18 can be moved, with minimal effort, in the longitudinal direction of the carrier 7, whilst a movement transversely to the longitudinal axis of the carrier 7 will practically be ruled out.

To the bottom side of the connecting strip 23 there is furthermore secured a further guide means consisting of a roller 26 and a pin 27 projecting below said roller, said roller 26 being freely rotatable about said pin.

Assuming that the carriers 7 forming the upper part of the conveying means lie in a horizontal plane, the pin 27 extends vertically downwards from an associated carrier 7.

As will furthermore be apparent from Figure 1 the pusher shoe 18 supported by a single carrier 7 not only extends over the carrier in question, but also over part of the adjacent carrier associated with the same group.

As is explained in the above-mentioned US patent specifications the pusher shoes can be moved in the longitudinal direction of the device by guide means such as rails or the like during operation, which guide means are fixed to the frame and co-operate with the guide means 26, 27, so as to push objects present on the carriers off the conveying means formed by said carriers at desired locations. For moving the pusher shoes constructions may be used which are known per se, so that in this context it is considered superfluous to give a more detailed explanation of these constructions.

When passing sprocket wheels or the like the groups of carriers supported by the supporting plates 3 and 4 can pivot with respect to the chains because the supporting plates 3 and 4 are each pivotally coupled to the chains 1 or 2 in only one point.

As set forth above the pusher shoes are generally disposed in front of the point where the objects to be conveyed are placed on the conveying means, near the one or the other end of the associated carriers 7. This may e.g. be effected by means of suitable guide means incorporated in the frame of the device, which act on the guide means 26, 27 while they are being moved by the lower part of the conveying means.

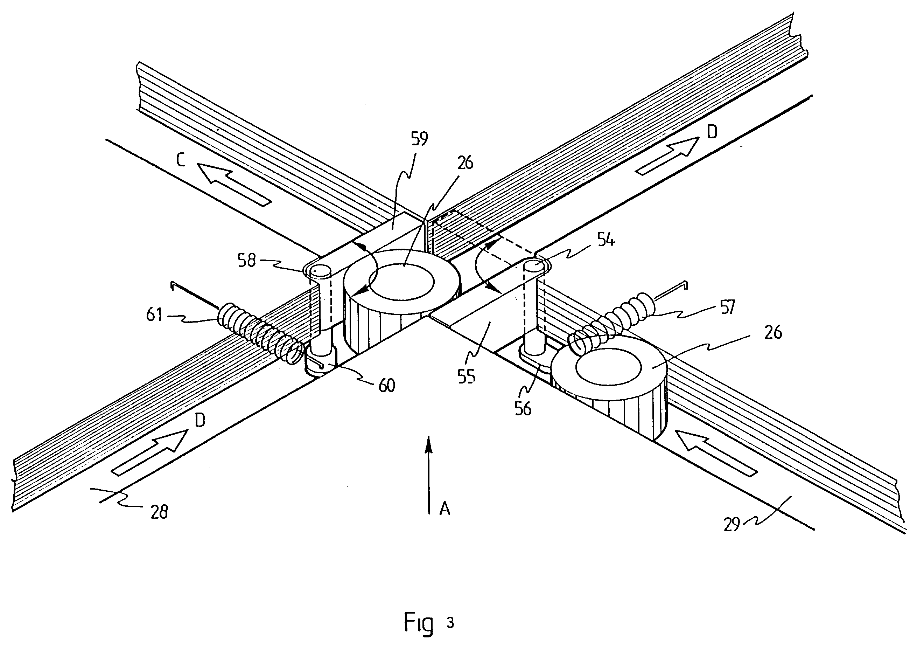

Near the intended point of discharge the pusher shoes in question are then moved, by means of suitable guide means, from the end where they are located in the direction of the other end of the carriers in question. In many cases discharge stations are located in opposed points on both sides of the conveying means, and therefore it will be possible that, dependent on the objects to be moved, in the one case a number of sliding shoes is to be moved along the carriers from the left toward the right and in the other case from the right toward the left, when seen in the direction of movement of the conveying means. In order to effect this intersecting guide rails, extending obliquely with respect to the direction of movement of the carriers with a switching construcion are arranged adjacent the discharge stations. Said construction is diagrammatically illustrated in Figure 3. The direction of movement of the carriers 7 will again be in the direction according to the arrow A in this Figure. Two intersecting, diagrammatically illustrated rails 28 and 29 are provided, so as to guide a guide means 26 coupled to a pusher shoe.

A vertical pin 54 is disposed near one side of the rail 29, upstream of the point of intersection of the rails 28 and 29 when seen in the direction of movement of a guide means 26 along the rail 29, to which pin there is secured a switch blade 55. An arm 56 is furthermore secured to the pin 54, to which the end of a tension spring 57 is hooked. The other end of said tension spring 57 is hooked behind a fixed point of the frame of the device. The construction is thereby such that the tension spring 57 attempts to keep the switch blade 55 in the position illustrated with full lines in figure 3, in which the switch blade 55 releases the passage through the rail 28, and further pivoting is limited by a stop (not shown).

In a similar manner a pin 58, which extends parallel to the pin 54, is provided near one side of the guide rail 28, upstream of the point of intersection between the guide rails 28 and 29. Said pin 58 supports a switch blade 59. To the pin 58 there is furthermore secured an arm 60 again, a tension spring 61 being provided between the arm 60 and the frame. The construction is thereby such that the tension spring 61 tends to keep the switch blade 59 in a position in which said switch blade extends transversely to the longitudinal direction of the rail 28. When a guide means 26 moves along the guide rail 28 in the direction according to the arrows D, however, a relevant guide means will press the switch blade 59 against the force of the spring 61 into the position illustrated in Figure 3, so that the guide means, guided by the switch blades 55 and 59 can pass the intersection through the rail 28 in question without impediment. Upon passage of such a guide means the switch blade 59 will return to a position extending perpendicularly to the longitudinal direction of the rail 28, so influenced by the spring 61. When subsequently a guide means moves through the rail 29, the switch blade 59 will maintain its latter position, whilst the switch blade 55 will be pivoted from the position illustrated with full lines in Figure 3 to the position illustrated with dotted lines in Figure 3. It will be apparent that the guide means then moving along the guide rail 29 can move through the rail 29 and pass the point of intersection of the rails 28 and 29 without impediment.

## Claims

1. A conveyor having a frame and an endless drivable conveying means provided with carriers (7) extending parallel to each other, transversely to the direction of displacement of the conveying means, said carriers (7) being pivotable coupled to at least one endless flexible coupling means (1, 2), whilst at least some of the carriers (7) support pusher shoes (18), said pusher shoes (18) being connected to guide means (26) located at the sides of the carriers (7) remote from the pusher shoes (18), which guide means (26) can co-operate with two guide rails (28, 29) provided at certain locations and extending in opposite directions, obliquely with respect to the intended direction of movement (A) of the carriers (7), said guide rails (28, 29) intersecting one another, whereby at the location of the point of intersection an adjustable switching device is provided, which is provided with at least one switch blade, which is adjustable between a first position, in which the guide means (28, 29) can move along the one of the two guide rails, and a second position, in which the guide means (26) can move along the other of the two guide rails (28, 29), characterised in that upstream of the point of intersection of the two guide rails (28, 29), when seen in the intended direction of movement (C, D) of the guide means (26) along the guide rails (28, 29) a switch blade (59, 55) is disposed near each guide rail so as to be pivotable about a pivot axis (58, 54) disposed upstream of the point of intersection, whilst resilient means (61, 57) are provided, which attempt to keep the switch blade (59, 55) in question in a position extending transversely to the associated rail (28, 29).

2. A conveyor according claim 1, characterised in that a switch blade (59, 55) has been fixed to a shaft (58, 54), an arm (60, 56) has been fixed to said shaft (58, 54) and a spring (61, 57) has been mounted between said arm (60, 56) and the frame of the conveyor.
